# EUROPEAN PATENT APPLICATION

(11) **EP 4 806 254 A1**
(43) Date of publication of application: **16.09.2026**
(21) Application number: 26163222.8
(22) Date of filing: 09.03.2026
(51) Int. Cl.: A01D 46/26

(54) **BEATING APPARATUS WITH CO-PLANAR OSCILLATING SECTORS SIDE BY SIDE WITH DOUBLE MOVEMENT**

(30) Priority: 12.03.2025 IT 202500005018
(71) Applicant: Zanon S.R.L., 35011 Campodarsego PD (IT)
(72) Inventor: Zanon, Franco, 35011 Campodarsego (Padova) (IT)
(74) Representative: Farago-Schauer, Peter Andreas

(57) **Abstract**

The present invention relates to a beating apparatus, particularly for harvesting olives and similar fruits. The beating apparatus comprises a support body to which two substantially coplanar oscillating sectors are pivoted, which are side by side and equipped with beating rods. The oscillating sectors are integrated into a mechanical transmission of motion that induces respective oscillatory motions in opposite directions combined with a respective motion substantially according to a conical surface.

## Description

The present invention relates to a beating apparatus, in particular for harvesting olives and similar fruits.

Beating is a historically known operation whose purpose is to cause the fruit of a plant to fall so that it can be collected. Beating methods generally involve shaking the branches of the plant in order to cause the fruit to detach.

This shaking is carried out with the aid of tools that can be simple sticks or rakes or apparatuses dedicated to this purpose, such as modern beaters.

These apparatuses have motor-driven rods at the end of an elongated handle. The operator inserts the rods between the branches of the plant so that they shake and possibly strike them, causing the fruit to fall.

There are currently various types of beating apparatuses, some of which have a disc-shaped head, supported by the working end of the handle, which holds rods around its perimeter that rotate along a conical path.

Another currently known apparatus has a pair of rake-shaped oscillating sectors at the working end of the handle, pivoted symmetrically on opposite sides of the working end.

Motorized means drive the symmetrical oscillation of the oscillating sectors, which, when inserted between the branches of a plant, shake them and also allow, thanks to their rake shape, a combing operation, to the advantage of rapid and effective fruit harvesting.

In a currently known model of beating apparatus, these motor means comprise an electric motor supported at the end of the handle opposite its working end, and a mechanical transmission which, passing inside the handle, functionally connects the motor to a piston device that drives the symmetrical oscillation of the oscillating sectors.

Although currently highly regarded, this apparatus has aspects that could be improved.

When both oscillating sectors operate simultaneously on a branch, due to their symmetrical oscillation, the operation of one of these sectors actually counteracts the operation of the other, thus inhibiting the shaking effect on the branch.

In the field of beating apparatuses, therefore, there is now a need for apparatuses that allow branches to be shaken effectively without damaging them through rubbing or percussion.

A currently known solution designed to meet this need is a beating apparatus comprising an elongated handle equipped, at one working end, with a support body to which two oscillating sectors equipped with fruit picking rods are articulated, two connecting rod elements, which functionally connect a crank element to the oscillating sectors so as to impart an oscillating motion to them during use.

The crank element is driven by an electric motor supported by the support body.

This beating apparatus allows the branches on which it operates to be shaken effectively, avoiding any antagonistic action of the beating rods thanks to their staggered oscillating motion, guaranteed by the simultaneous operation of the two levers moved by the crank element.

In the broader field of orchard maintenance and care equipment, however, there is another important requirement, which is to reduce the number and complexity of tools in order to limit the costs of purchasing and maintaining them and those associated with their storage when not in use.

EP 2374345 describes a beating apparatus comprising a support body to which two oscillating sectors equipped with rods and two connecting rods are pivoted, functionally connecting a crank element to the oscillating sectors in order to impart oscillatory movements to them during use.

The crank element is connected, by means of a mechanical transmission, to a connector connected to a drive motor. The crank element is equipped with an eccentric pin which is rotatably coupled to the first and second connecting rods, so as to define a kinematic structure for the implementation of mutually offset oscillations of the oscillating sectors.

The aim of this invention is to create a beating apparatus that improves the olive harvesting operation by devising a new movement that is not particularly complicated from a mechanical point of view.

Within the scope of this task, one aim of the invention is to propose a beating apparatus that can be integrated with a motor device, even if not specifically designed for it, to be driven by it.

A further aim of the invention is to create a beating apparatus that allows for synergy between components and other tools commonly used in the field of orchard care and, more generally, in the field of agricultural and forestry activities.

Another air of the invention is to propose a beating apparatus that is simple and easy to use and can be produced at relatively low cost.

This aims, as well as these and other aims that will become clearer later, are achieved by a beating apparatus, particularly for harvesting olives and similar fruits, comprising a support body to which two substantially coplanar oscillating sectors are pivoted, side by side and equipped with beating rods, said oscillating sectors being integrated into a mechanical transmission of motion that induces a first oscillatory motion of the oscillating sectors in a first direction and a second oscillatory motion of the oscillating sectors in a second direction which in combination provide for a substantially conical motion of the oscillating sectors.

Further features and advantages of the invention will be better understood from the description of a preferred, but not exclusive, embodiment of the beating apparatus according to the invention, illustrated by way of example and not limitation in the accompanying drawings, in which:
Figure 1 is a first perspective view, partially sectioned, in side elevation;
Figure 2 is a second perspective view, partially sectioned, in lateral elevation;

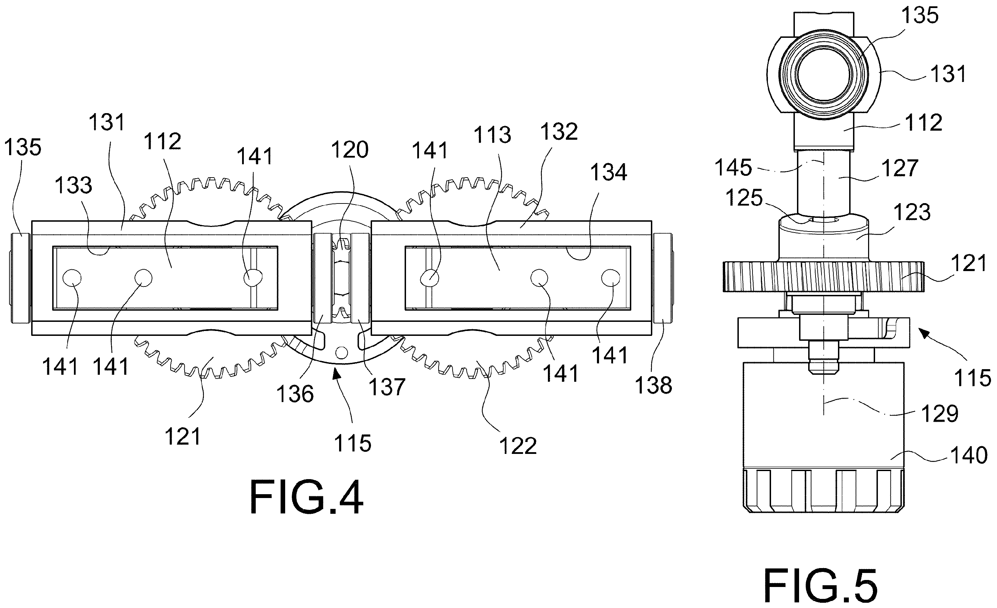

Figures 3, 4, and 5 are front, side, and top views, respectively.

It should be noted that anything that is already known during the patenting process is not to be considered claimed and will be subject to a disclaimer clause.

With reference to the figures mentioned, a beating apparatus 110, particularly for harvesting olives and similar fruits, comprises a support body 111 to which two substantially coplanar oscillating sectors 112, 113 are pivoted, side by side and equipped with beating rods 142.

These oscillating sectors 112, 113 are integrated into a mechanical motion transmission 115 that induces a first oscillatory motion of the oscillating sectors 112, 113 in a first direction 116, 117 and a second oscillatory motion of the oscillating sectors 112, 113 in a second direction 145, 146 which in combination provide for a substantially conical motion of the oscillating sectors 112, 113 along respective conical surfaces 118, 119.

More specifically, according to the invention, the support body 111 carries a central drive gear 120 with which respective driven gears 121, 122 engage from diametrically opposite sides. The gears 120, 121, 122 have helicoidal or straight teeth as appropriate.

On each driven gear 121, 122, on a side facing the oscillating sectors 112, 113, there is an eccentric expansion 123, 124 which constitutes a respective seat 125, 126 for the rotation of a respective pin 127, 128 which is inclined with respect to the respective axes of rotation 129, 130 of the driven gears 121, 122. The inclination of the pins 127, 128 with respect to the axles of rotation 129, 130 is combined with the eccentricity of the respective rotation seats 125, 126 to define the rotational connection of the pins 127, 128.

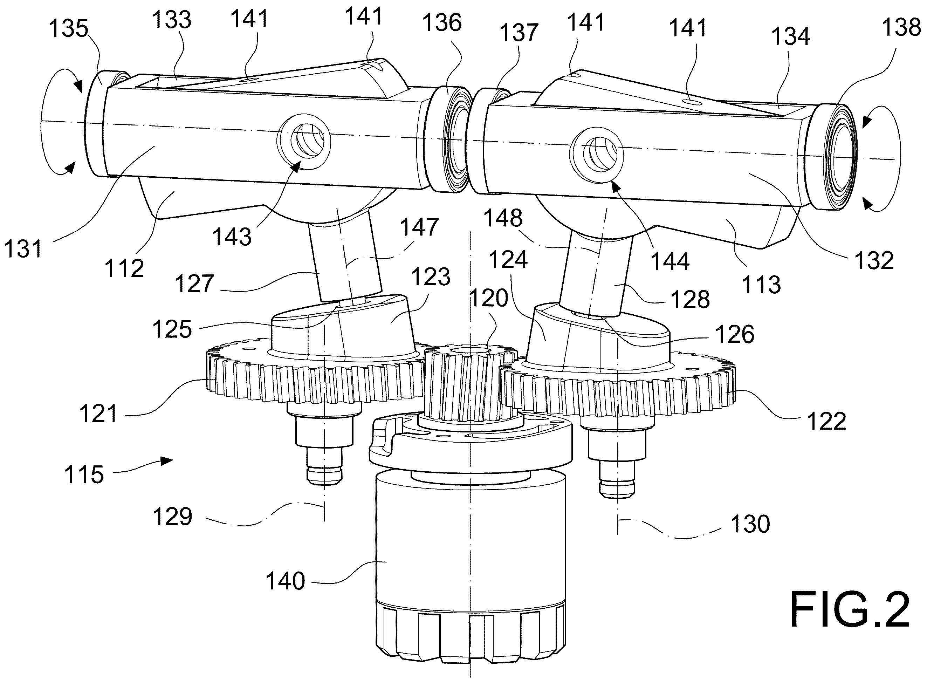

Slightly spaced apart from the support body 111 are two frames 131, 132 arranged side by side, which constitute the rotation fulcrums of the oscillating sectors 112, 113, said frames 131, 132 being rotatably retained in respective seats 133, 134, for inducing oscillatory motions in the first direction 116, 117 and the second direction 145, 146. The first and second directions lay preferably in planes which are substantially perpendicular. Rotation bearings 135, 136, 137, 138 are arranged at the respective ends of the frames 131, 132 and allow these rotations with an axis orthogonal to the direction of development (see arrows in Figure 2).

A motor 140, for example of the brushless type, is advantageously connected to the central motor gear 120.

Alternatively, a connecting rod, not shown, may be provided to transmit motion from a handle.

Preferably, the oscillating sectors 112, 113 have insertion holes 141 for one end of the beating rods 142.

During use, the ends of the beating rods 142 are inserted into the holes 141 and locked in place by tightening screws not shown in the figures.

The use of a beating apparatus according to the invention is as follows. The operator connects it, for example, to an electric power supply battery.

When the operator starts the motor 140, the central gear 120 drives the mechanical transmission, which transmits the motion to the driven gears 121, 122.

The rotation of the latter also induces movement in the eccentric expansions 123, 124 and, as a result, a motion substantially along the conical surfaces 118, 119 will be generated, each conical surface 118, 119 having a respective axis 147, 148 which is inclined with respect to the axles 128, 129 of the driven gears 121, 122.

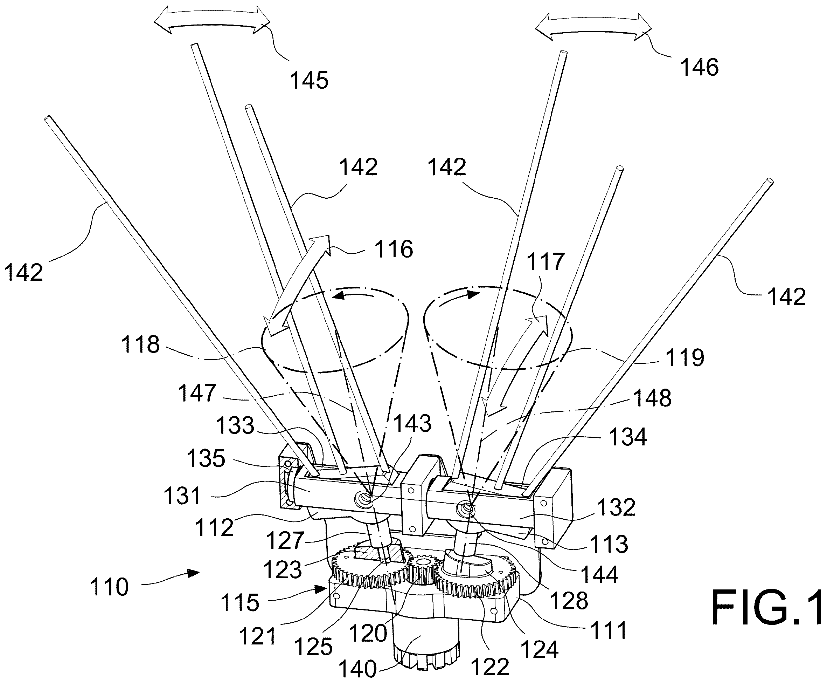

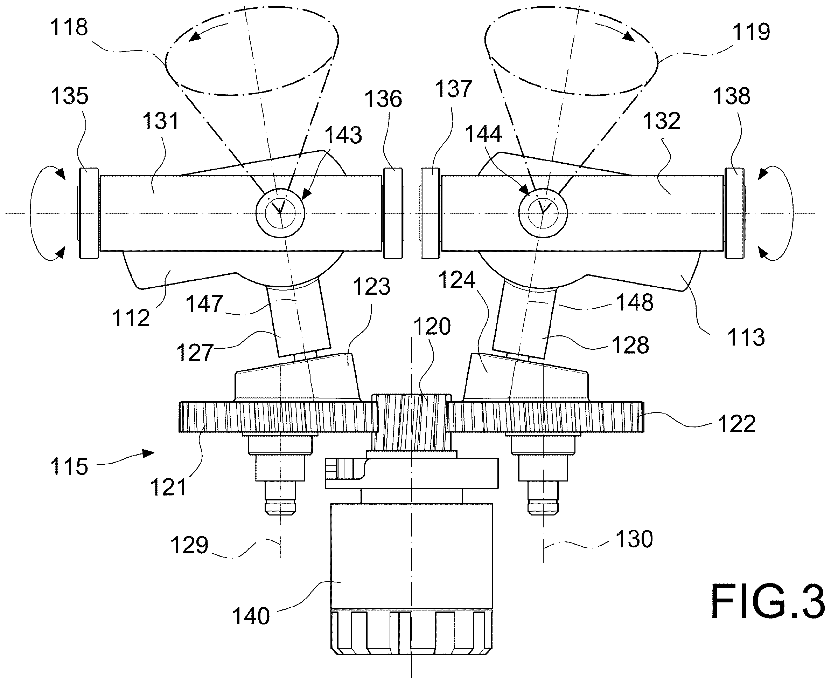

The movement substantially along the conical surface 118, 119 means movement that develops three-dimensionally along respective conical figures, as shown in Figures 1 and 3.

The movement can be seen in Figure 1 which shows the first directions 116, 117 and the second directions 146, 147.

The fulcrum points for the movement along the conical surface 118, 119 are indicated by numbers 143 and 144, the fulcrum points 143, 144 being on the respective frames 131, 132.

The rotation of the pins 126, 127 induces the combined oscillatory movement of the oscillating sectors 112, 113 in the first and second directions resulting in the conical motion of the oscillating sectors 112, 113 along respective conical surfaces 118, 119.

According to preferred embodiments, the invention provides for the following items:
Item 1. A beating apparatus (110), particularly for harvesting olives, comprising a support body (111) to which two oscillating sectors (112, 113) are hinged, said oscillating sectors (112, 113) being substantially coplanar, placed side by side and provided with beating rods (142), said oscillating sectors (112, 113) being integrated into a mechanical transmission of motion (115) that induces respective oscillatory motions (116, 117) in opposite directions combined with a motion substantially along a conical surface (118, 119),
   wherein said support body (111) carries a central drive gear (120) with which two respective driven gears (121, 122) mesh on diametrically opposite sides, and
   wherein for each respective driven gear (121, 122) on the face opposite to a rotational connection face there is an eccentric expansion (123, 124) which constitutes a rotation seat (125, 126) of a respective pin (127, 128) which is inclined with respect to the respective rotation axes (129, 130) of the driven gears (121, 122).
Item 2. The beating apparatus of Item 1, wherein said oscillating sectors (112, 113) are integrated into the mechanical transmission of motion (115) that induces the respective oscillatory motions (116, 117) in opposite directions combined with a respective substantially conical motion (118, 119),
Item 3 The beating apparatus according to Items 1 or 2, wherein said gears (120, 121, 122) have helicoidal or straight teeth.
Item 4. The beating apparatus, according one or more of the preceding Items, wherein said rotational connection in the seat (125, 126) is made with a spherical joint.
Item 5. The beating apparatus according one or more of the preceding Items, wherein two frames (131, 132) are arranged side by side, spaced from said support body (111), which constitute the rotation fulcrums of the oscillating sectors (112, 113) which rotate around respective seats (133, 134) inducing oscillatory motions in opposite directions.
Item 6. The beating apparatus according Items 4 or 5, wherein rotation bearings (135, 136, 137, 138) are arranged at the ends of said frames (131, 132).
Item 7. The beating apparatus according one or more of the preceding Items, wherein a motor (140) is connected to said central motor gear (120).
Item 8. The beating apparatus according to Item 7, wherein said motor (140) is of the brushless type.
Item 9. The beating apparatus according one or more of the preceding Items, wherein a connecting rod can be provided which carries the motion from a handle.
Item 10. The beating apparatus according one or more of the preceding Items, wherein said oscillating sectors (112, 113) have insertion holes (141) for one end of the beating rods (142).
Item 11. The beating apparatus according to Item 10, wherein the ends of said beating rods (142) are locked in the insertion holes (141) by tightening screws.

In practice, it has been found that the invention achieves its intended purpose and purposes, creating a structurally simple and compact bearing apparatus.

The beating apparatus is simple to manufacture and easy to use and can be produced at relatively low cost.

The invention as conceived is susceptible to numerous modifications and variations, all falling within the scope of the inventive concept; furthermore, all details may be replaced with other technically equivalent elements.

In practice, the materials used, provided they are compatible with the specific use, as well as the contingent shapes and dimensions, may be any according to the requirements and the state of the art.

Where the technical features mentioned in any claim are followed by reference signs, these reference signs have been included for the sole purpose of increasing the intelligibility of the claims and, consequently, these reference signs have no limiting effect on the interpretation of each element identified by way of example by these reference signs.

## Claims

1. A beating apparatus (110), particularly for harvesting olives, comprising a support body (111) to which two oscillating sectors (112, 113) are hinged, said oscillating sectors (112, 113) being substantially coplanar, placed side by side and provided with beating rods (142), said oscillating sectors (112, 113) being integrated into a mechanical transmission of motion (115) that induces a first oscillatory motion of the oscillating sectors (112, 113) in a first direction (116, 117) and a second oscillatory motion of the oscillating sectors (112, 113) in a second direction (145, 146) which in combination provide for a substantially conical motion of the oscillating sectors (112, 113) along a respective conical surface (118, 119),
wherein said support body (111) carries a central drive gear (120) with which two respective driven gears (121, 122) mesh on diametrically opposite sides, and
wherein for each respective driven gear (121, 122), on a side facing the oscillating sectors (112, 113), there is an eccentric expansion (123, 124) which defines a rotation seat (125, 126) of a respective pin (127, 128), each pin (127, 128) being inclined with respect to the respective rotation axes (129, 130) of the driven gears (121, 122), each pin (127, 128) being connected to a respective oscillating sector (112, 113).

2. The beating apparatus according to claim 1, wherein said gears (120, 121, 122) have helicoidal or straight teeth.

3. The beating apparatus according to claims 1 or 2, said seats (126, 127) define respective rotational connections for the pins (127, 128), each seat (125, 126) including a spherical joint.

4. The beating apparatus according one or more of the preceding claims, further comprising two frames (131, 132) which are arranged side by side and spaced from said support body (111), said frames (131, 132) including fulcrum points (143, 144) to which the oscillating sectors (112, 113) are rotatably coupled.

5. The beating apparatus according one or more of the preceding claims, wherein each frames (131, 132) is rotationally held in respective seats (133, 134) which are arranged at the respective ends of said frames (131, 132).

6. The beating apparatus according claim 5, wherein each seat (133, 134) comprises a respective rotation bearing (135, 136, 137, 138).

7. The beating apparatus according one or more of the preceding claims, wherein a motor (140) is connected to said central motor gear (120).

8. The beating apparatus according to claim 7, wherein said motor (140) is of the brushless type.

9. The beating apparatus according one or more of the preceding claims, wherein a connecting rod can be provided which carries the motion from a handle.

10. The beating apparatus according one or more of the preceding claims, wherein said oscillating sectors (112, 113) have insertion holes (141) for one end of the beating rods (142).

11. The beating apparatus according to claim 10, wherein the ends of said beating rods (142) are locked in the insertion holes (141) by tightening screws.
